# FASCICULE DE BREVET EUROPEEN

(11) **EP 0 630 549 B1**
(45) Date de publication et mention de la délivrance du brevet: **22.11.1995**
(21) Numéro de dépôt: 93918752.2
(22) Date de dépôt: 12.03.1993
(51) Int. Cl.: H04R 25/00, H02J 7/00

(54) **DISPOSITIF PERMETTANT LA RECHARGE DE L'ACCUMULATEUR D'UNE PROTHESE INTRA-AURICULAIRE ET PROCEDE POUR LA FABRICATION DE CE DISPOSITIF**
VORRICHTUNG ZUM WIEDERAUFLADEN DER BATTERIE EINES IM-OHR-HöRGERäTES UND VERFAHREN ZUR HERSTELLUNG DER VORRICHTUNG
DEVICE FOR RECHARGING AN INTRA-AURICULAR PROSTHESIS BATTERY AND PROCESS FOR THE MANUFACTURE OF SAID DEVICE.

(30) Priorité: 13.03.1992 FR 9203267
(43) Date de publication de la demande: 28.12.1994
(73) Titulaire: AUDIOLOGIE PROTHESE INNOVATION A.P.I., 69006 Lyon (FR)
(72) Inventeur: GROSFILLEY, Jean-Etienne, F-01600 Massieux (FR)
(74) Mandataire: Maureau, Philippe
(86) Numéro de dépôt international: FR9300249
(87) Numéro de publication internationale: WO9318629

(56) Documents cités:
- EP-A- 0 197 630
- US-A- 4 186 335
- HEARING INSTRUMENTS vol. 38, no. 7, Juillet 1987, DULUTH, MINNESOTA US pages 16 - 18 T. GITLES ET AL. 'The rechargeable hearing instrument system'
- HEARING INSTRUMENTS vol. 41, no. 12, Décembre 1990, DULUTH, MINNESOTA US page 41 'Rechargeable ITE'

## Description

La présente invention concerne un dispositif permettant la recharge de l'accumulateur d'une prothèse auditive intra-auriculaire, la prothèse auditive intra-auriculaire utilisable avec ce dispositif et un procédé pour la fabrication de ce dispositif.

Une prothèse auditive intra-auriculaire présente un corps creux logeant une pile miniaturisée qui sert à l'alimentation du microphone, de l'amplificateur et de l'écouteur qu'elle comprend, eux-mêmes également miniaturisés et logés dans son corps, et a des dimensions relativement réduites, une paroi extérieure lisse et une forme spécifique adaptée à sa mise en place et à son port dans l'oreille.

Selon les prothèses, la pile doit être échangée tous les trois à quinze jours. Pour cela, il convient de soulever la trappe de fermeture du boîtier de la pile, de retirer la pile usagée, de la remplacer puis de remettre en place le couvercle du boîtier.

On conçoît aisément les difficultés que ces différentes opérations successives peuvent représenter pour les personnes malhabiles de leurs mains, notamment les personnes âgées, compte tenu des difficultés qu'il y a à saisir et à maintenir le corps de la prothèse pendant le retrait et pendant la mise en place de la pile, elle-même difficile à saisir.

La prothèse peut être perdue ou détériorée en cas de chute sur le sol à l'occasion de ces manipulations.

De plus, la trappe d'ouverture précitée est située sur la face du corps de la prothèse qui est visible de l'extérieur lorsque celle-ci est placée dans l'oreille, ce qui est préjudiciable à l'aspect visuel de la prothèse.

Il existe bien une prothèse comprenant un accumulateur et une bobine qui permet la recharge de l'accumulateur par induction, donc sans le sortir du corps, ainsi que cela est décrit dans la revue "Hearing Instruments" vol. 38, no. 7 de juillet 1987, mais cette prothèse présente l'inconvénient d'être très volumineuse du fait des dimensions de la bobine et, par conséquent, peu discrète et inesthétique.

La présente invention vise à remédier à l'ensemble de ces inconvénients.

A cette fin, le dispositif qu'elle concerne comprend un support présentant un logement exactement à la forme extérieure de la prothèse, dans lequel celle-ci peut être introduite, et deux bornes conductrices reliées à une source de courant électrique, faisant saillie de la paroi du support délimitant ledit logement. La prothèse auditive intra-auriculaire utilisable avec ce support comprend, quant à elle, un accumulateur et deux surfaces conductrices reliées aux bornes de l'accumulateur, aptes chacune à venir au contact de l'une des bornes conductrices du support lorsque la prothèse est engagée dans le logement que celui-ci comprend pour la recevoir.

Ainsi, il suffit d'introduire la prothèse dans le logement du support pour amener les surfaces conductrices qu'elle comprend au contact des bornes du support et pour pouvoir recharger l'accumulateur. Il n'est, dès lors, plus nécessaire de manipuler la prothèse, de l'ouvrir pour retirer l'accumulateur, ni de prévoir de trappe disgracieuse sur l'une des parois du corps de celle-ci.

Bien entendu, le support peut être à simple ou double logement selon que le patient a une seule ou deux prothèses.

Avantageusement, le support de la prothèse est réalisé en matériau souple, tel qu'en mastic aux silicones.

La souplesse de ce matériau facilite la mise en place et le retrait de la prothèse et permet à celle-ci de jouer par rapport à son support jusqu'à ce qu'elle soit placée dans sa position correcte permettant le rechargement de l'accumulateur.

De préférence, les surfaces de contact de la prothèse sont situées au fond de deux trous ménagés dans la paroi de celle-ci, aptes à être engagés sur les bornes de contact du support.

De cette manière, lorsque les bornes sont engagées dans les trous, la prothèse est immobilisée par rapport à son support tandis que, ainsi qu'il a été indiqué ci-dessus, lorsque le matériau constituant le support est souple, la prothèse peut jouer par rapport à ce dernier. Ainsi, selon que la prothèse joue ou non, l'utilisateur peut savoir si elle est correctement positionnée ou non pour le rechargement de l'accumulateur.

Avantageusement, le support et les bornes conductrices sont placés dans un boîtier muni d'un couvercle, ce boîtier comportant une prise de branchement à la source d'alimentation en courant électrique. La face interne du couvercle peut comprendre un tampon en matière souple, disposé de manière à venir appuyer sur la prothèse lorsque le couvercle est en position fermée, ce qui permet d'assurer la venue des surfaces conductrices de la prothèse au contact des bornes du support et le maintien de ce contact.

L'invention concerne également un procédé de réalisation du support selon au moins l'une des revendications ci-dessus, consistant à mouler le matériau destiné à constituer le support autour de la prothèse, de telle sorte que le support ainsi obtenu présente un logement formé, en fait, par l'empreinte de la prothèse elle-même. Cette dernière peut, dès lors, être positionnée avec une précision parfaite par rapport aux bornes conductrices.

Avantageusement, du mastic aux silicones est employé comme matériau pour constituer le support.

De préférence, lorsque la prothèse comprend les deux trous précités, ceux-ci sont ménagés avec un diamètre et une profondeur tels qu'ils permettent l'engagement et le maintien des bornes conductrices sur la prothèse, le procédé consistant alors à engager la prothèse sur lesdites bornes, à mouler le matériau devant constituer le support autour de la prothèse et des bornes, à retirer la prothèse en dégageant les bornes de ses trous puis à percer les trous de manière à ce qu'ils traversent sa paroi, les surfaces conductrices étant ensuite mises en place à l'intérieur du corps de la prothèse, en face de l'ouverture des trous. Le positionnement de la prothèse pendant l'opération de moulage est ainsi réalisé au moyen des bornes conductrices elles-mêmes, et, donc, de manière particulièrement simple. De plus, les trous se trouvent parfaitement en face des bornes lors de l'engagement de la prothèse dans le fond de son logement.

De toute façon, l'invention sera bien comprise à l'aide de la description qui suit, en référence au dessin schématique annexé représentant, à titre d'exemple non limitatif, une forme de réalisation préférée du dispositif et de la prothèse qu'elle concerne.
La figure 1 en est une vue en perspective éclatée et
la figure 2 en est une vue une coupe selon II-II de figure 1.

Les figures représentent, sous différents angles, un dispositif 2 pour le rechargement des accumulateurs 3 d'une paire de prothèses auditives intra-auriculaires 4 pour oreilles gauche et droite.

Le dispositif 2 comprend :
- un boîtier 5 muni d'un couvercle 5a et d'une prise de branchement 6 à une source d'alimentation en courant électrique ;
- une traverse 7, sur laquelle peut être montée une plaque 8 à l'aide de vis 9, la plaque 8 comprenant deux trous 10 ménagés au centre de chacune de ses parties situées de part et d'autre de la traverse 7 ;
- deux blocs 11 de mastic aux silicones, comprenant chacun un logement 12 de réception de la prothèse 4, formé, en fait, par l'empreinte de la prothèse 4 elle-même, un plot cylindrique 13 pouvant être engagé au travers du trou 10 pour le maintien du bloc 11 sur la plaque 8 ;
- deux paires de bornes conductrices 14 traversant chacune l'un des blocs 11, l'une des extrémités des bornes 14 faisant saillie de la paroi du bloc 11 dans le logement 12 et leur autre extrémité étant raccordée à la prise 6 par l'intermédiaire de fils 15 conducteurs de courant électrique, et
- une barre d'habillage 16, remplissant l'espace entre les blocs 11 et masquant les vis 9.

Le boîtier 5 comprend une attache de fermeture 17 et son couvercle 5a comprend des tampons de matière souple 18, disposés de manière à venir en appui sur les prothèses 4 en position fermée du couvercle 5a.

Chaque prothèse 4 comprend deux trous 19, traversant sa paroi et aptes à être engagés sur l'extrémité des bornes 14 qui dépassent du bloc 11 dans le logement 12, et deux surfaces conductrices de l'électricité, tels que des filaments métalliques, qui sont fixées à la face interne de la paroi de la prothèse 4 en face de l'ouverture des trous 19 et qui sont reliées électriquement aux bornes de l'accumulateur 3.

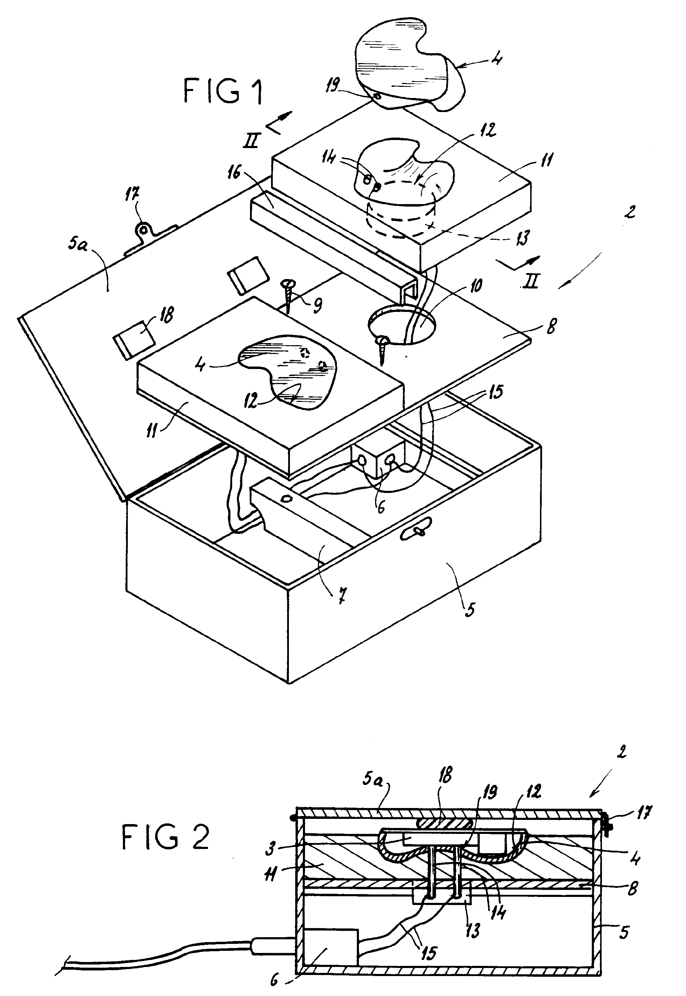

Comme cela est visible sur les figures, les logements 12 sont destinés à recevoir les prothèses 4 au cours de l'opération de rechargement des accumulateurs 3, avec engagement de celles-ci sur les bornes 14 grâce aux trous 19. Le fait que les logements 12 soient constitués par l'empreinte des prothèses 4 elles-mêmes permet leur parfait positionnement par rapport aux bornes 14, de sorte que leur engagement sur elles est facile à réaliser, même par un malentendant à dextérité manuelle limitée. La souplesse du matériau constituant les blocs 11 facilite la mise en place et le retrait des prothèses et permet à celles-ci de jouer par rapport à eux jusqu'à ce qu'elles soient placées dans la position correcte permettant leur engagement sur les bornes 14. Dans cette position, elles sont immobilisées par rapport aux blocs 11 : il est ainsi facile à l'utilisateur, selon que les prothèses 4 jouent ou non par rapport aux blocs 11, de savoir si elles sont correctement positionnées ou non pour la recharge des accumulateurs 3. Comme le montre la figure 2, les tampons 18 viennent appuyer contre les prothèses 4 pour assurer le maintien du contact entre leurs surfaces conductrices et les bornes conductrices 14.

Des voyants lumineux peuvent être prévus pour indiquer le bon positionnement de la prothèse dans son support et le bon déroulement de la charge des accumulateurs.

Le procédé préférentiel de réalisation du dispositif 2 consiste à percer les trous 19 dans les prothèses 4, sans les faire déboucher à l'intérieur de celles-ci et avec un diamètre et une profondeur tels qu'ils permettent l'engagement et le maintien des bornes 14 sur elles, à engager lesdites bornes 14 sur les prothèses 4, à mouler le matériau devant constituant les blocs 11 autour des prothèses 4 et des bornes, à retirer les prothèses 4 en dégageant les bornes 14 des trous 19 puis à percer les trous 19 de manière à ce qu'ils traversent la paroi des prothèses 4, les surfaces conductrices des prothèses 4 étant ensuite mises en place à l'intérieur de celles-ci en face de l'ouverture des trous 19. Le Positionnement des prothèses 4 pendant l'opération de moulage est ainsi réalisé au moyen des bornes conductrices 14 elles-mêmes et, donc, de manière particulièrement simple, et les trous 19 se trouvent parfaitement en face des bornes 14 lors de l'engagement des prothèses 4 dans le fond des logements 12.

## Revendications

1. Dispositif (2) permettant la recharge de l'accumulateur (3) d'une prothèse auditive intra-auriculaire (4), comprenant un support (11) présentant un logement (12) pouvant recevoir la prothèse, caractérisé en ce que le logement (12) correspond exactement à la forme extérieure de la prothèse (4), dans lequel celle-ci peut être introduite, et deux bornes conductrices (14) reliées à une source de courant électrique et faisant saillie de la paroi du support (11) délimitant ledit logement (12).

2. Dispositif selon la revendication 1, caractérisé en ce que le support (11) de la prothèse (4) est réalisé en matériau souple, tel qu'en mastic aux silicones.

3. Dispositif selon la revendication 1 ou la revendication 2, caractérisé en ce que le support (11) et les bornes conductrices (14) sont placés dans un boîtier (5) muni d'un couvercle (5a), ce boîtier comportant une prise de branchement à la source d'alimentation en courant électrique.

4. Dispositif selon la revendication 3, caractérisé en ce que la face interne du couvercle (5a) comprend un tampon en matière souple disposé de manière à venir appuyer sur la prothèse lorsque le couvercle (5a) est en position fermée.

5. Dispositif selon l'une des revendications 1 à 4, caractérisé en ce qu'il est à simple ou à double logement (12) selon le nombre de prothèses (4) utilisées.

6. Prothèse auditive intra-auriculaire (4) utilisable avec le dispositif (2) selon l'une des revendications 1 à 5, caractérisée en ce qu'elle comprend un accumulateur (3) et deux surfaces conductrices reliées aux bornes de l'accumulateur (3), aptes chacune à venir au contact de l'une des bornes conductrices (14) du support (11) lorsque la prothèse (4) est engagée dans le logement (12) que celui-ci comprend pour la recevoir.

7. Prothèse selon la revendication 6, caractérisée en ce que ses surfaces de contact sont situées au fond de deux trous (19) ménagés dans sa paroi.

8. Procédé de réalisation du dispositif selon l'une des revendications 1 à 5, caractérisé en ce qu'il consiste à mouler le matériau destiné à constituer le support (11) autour de la prothèse (4), de telle sorte que le support (11) ainsi obtenu présente un logement (12) formé, en fait, par l'empreinte de la prothèse (4) elle-même.

9. Procédé selon la revendication 8, caractérisé en ce que du mastic aux silicones est employé comme matériau pour constituer le support (11).

10. Procédé selon les revendications 8 ou 9, caractérisé en ce qu'il consiste, lorsque la prothèse (4) comprend les deux trous (19) ménagés dans sa paroi de sorte qu'ils ne débouchent pas à l'intérieur de la prothèse (4) et que ceux-ci sont ménagés avec un diamètre et une profondeur tels qu'ils permettent l'engagement et le maintien des bornes conductrices (14) sur elle, à engager la prothèse (4) sur lesdites bornes (14), à mouler le matériau devant constituer le support (11) autour de la prothèse (4) et des bornes (14), à retirer la prothèse (4) en dégageant les bornes (14) de ses trous (19) puis à percer les trous (19) de manière à ce qu'ils traversent la paroi de la prothèse (4), les surfaces conductrices étant ensuite mises en place à l'intérieur du corps de la prothèse (4), en face de l'ouverture des trous (19).

## Patentansprüche

1. Vorrichtung (2), welche das Nachladen des Akkumulators (3) einer intra-aurikularen Gehörprothese (4) ermöglicht, umfassend einen einen Sitz (12) zum Aufnehmen der Prothese aufweisenden Träger (11), **dadurch gekennzeichnet**, daß der Sitz (12) exakt der äußeren Form der in ihn einbringbaren Prothese (4) entspricht und daß zwei leitende Anschlüsse (14) vorgesehen sind, welche mit einer Quelle für elektrischen Strom verbunden sind und von der den Sitz (12) festlegenden Wandung des Trägers (11) vorstehen.

2. Vorrichtung nach Anspruch 1, **dadurch gekennzeichnet**, daß der Träger (11) der Prothese (4) aus einem nachgiebigen Material gebildet ist, z.B. aus Silikone enthaltendem Mastix.

3. Vorrichtung nach Anspruch 1 oder Anspruch 2, **dadurch gekennzeichnet**, daß der Träger (11) und die leitenden Anschlüsse (14) in einem mit einem Deckel (5a) versehenen Gehäuse (5) angeordnet sind, wobei das Gehäuse eine Anschlußstelle zu der Quelle zur Versorgung mit elektrischem Strom umfaßt.

4. Vorrichtung nach Anspruch 3, **dadurch gekennzeichnet**, daß die Innenseite des Deckels (5a) einen Puffer aus nachgiebigem Material umfaßt, welcher derart angeordnet ist, daß er an der Prothese anliegt, wenn sich der Deckel (5a) in Schließstellung befindet.

5. Vorrichtung nach einem der Ansprüche 1 bis 4, **dadurch gekennzeichnet**, daß sie gemäß der Anzahl der verwendeten Prothesen (4) mit einfachem oder doppeltem Sitz (12) ausgebildet ist.

6. Intra-aurikulare Gehörprothese (4), welche mit der Vorrichtung (2) nach einem der Ansprüche 1 bis 5 verwendbar ist, **dadurch gekennzeichnet**, daß sie einen Akkumulator (3) aufweist, sowie zwei mit den Anschlüssen des Akkumulators (3) verbundene, leitende Flächen, welche jeweils dazu geeignet sind, mit einem der leitenden Anschlüsse (14) des Trägers (11) in Kontakt zu treten, wenn die Prothese (4) in den vom Träger zu ihrer Aufnahme vorgesehenen Sitz (12) eingebracht ist.

7. Prothese nach Anspruch 6, **dadurch gekennzeichnet**, daß sich ihre Kontaktflächen am Grund zweier in ihrer Wandung ausgebildeter Löcher (19) befinden.

8. Verfahren zur Herstellung der Vorrichtung nach einem der Ansprüche 1 bis 5, **dadurch gekennzeichnet**, daß es das Formen des zum Bilden des Trägers (11) bestimmten Materials um die Prothese (4) umfaßt derart, daß der auf diese Weise erhaltene Träger (11) einen tatsächlich durch den Abdruck der Prothese (4) selbst geformten Sitz (12) aufweist.

9. Verfahren nach Anspruch 8, **dadurch gekennzeichnet**, daß Silikone enthaltendes Mastix als Material zur Bildung des Trägers (11) verwendet wird.

10. Verfahren nach den Ansprüchen 8 oder 9, **dadurch gekennzeichnet,** daß es dann, wenn die Prothese (4) die beiden Löcher (19) umfaßt, welche in ihrer Wandung derart ausgebildet sind, daß sie nicht ins Innere der Prothese (4) münden, und wenn diese mit einem Durchmesser und einer Tiefe ausgebildet sind, welche das Einbringen und das Halten der leitenden Anschlüsse (14) in sie ermöglichen, die Schritte umfaßt Aufbringen der Prothese (4) auf die Anschlüsse (14), Formen des zur Bildung des Trägers (11) bestimmten Materials um die Prothese (4) und die Anschlüsse (14), Herausnehmen der Prothese (4) unter Freisetzung der Anschlüsse (14) aus ihren Löchern (19) und dann Durchbrechen der Löcher (19), so daß sie die Wandung der Prothese (4) durchsetzen, wobei die leitenden Flächen danach im Inneren des Körpers der Prothese (4) vor der Öffnung der Löcher (19) angeordnet werden.

## Claims

1. Device (2) allowing recharging of the battery (3) of an intra-auricular hearing aid (4), including a holder (11) having a recess (12) which is able to receive the hearing aid characterized in that the recess (12) corresponds exactly with the outer shape of the hearing aid (4) and into which the latter can be inserted, and two conductor terminals (14) connected to a source of electric current and projecting from the wall of the holder (11) defining said recess (12).

2. Device according to Claim 1, characterized in that the holder (11) of the hearing aid (4) is made of flexible material, such as silicone mastic.

3. Device according to Claim 1 or 2, characterized in that the holder (11) and the conductor terminals (14) are placed in a case (5) provided with a lid (5a), this case including a socket for connection to the source of the electric current supply.

4. Device according to Claim 3, characterized in that the inner surface of the lid (5a) includes a pad made of flexible material disposed so as to come to rest on the hearing aid when the lid (5a) is in the closed position.

5. Device according to one of Claims 1 to 4, characterized in that it has a single or double recess (12) according to the number of hearing aids (4) used.

6. Intra-auricular hearing aid (4), usable with the device (2) according to one of Claims 1 to 5, characterized in that it includes a battery (3) and two conducting surfaces connected to the terminals of the battery (3), each of these surfaces being such as to come into contact with one of the conductor terminals (14) of the holder (11) when the hearing aid (4) is fitted into the recess (12) which is provided in the holder to receive it.

7. Hearing aid according to Claim 6, characterized in that its contact surfaces are located at the bottom of two holes (19) made in its wall.

8. Method of manufacturing the device according to one of Claims 1 to 5, characterized in that it consists of moulding the material intended to form the holder (11) around the hearing aid (4), in such a way that the holder (11) thus obtained has a recess (12) actually formed by the impression of the hearing aid (4) itself.

9. Method according to Claim 8, characterized in that silicone mastic is used as material for forming the holder (11).

10. Method according to Claims 8 or 9, characterized in that it consists, when the hearing aid (4) includes the two holes (19) made in its wall in such a way that they do not run into the interior of the hearing aid (4) and these holes are made with such a diameter and depth that they allow the conductor terminals (14) to be fitted and held in position on it, of fitting the hearing aid (4) onto said terminals (14), moulding the material for forming the holder (11) around the hearing aid (4) and the terminals (14), removing the hearing aid (4) by disengaging the terminals (14) from the holes (19), then making the holes (19) so that they pass through the wall of the hearing aid (4), the conducting surfaces then being positioned inside the body of the hearing aid (4), opposite the openings of the holes (19).
